# EUROPÄISCHE PATENTSCHRIFT

(11) **EP 3 989 018 B1**
(45) Veröffentlichungstag und Bekanntmachung des Hinweises auf die Patenterteilung: **06.12.2023**
(21) Anmeldenummer: 21204120.6
(22) Anmeldetag: 22.10.2021
(51) Int. Cl.: G05B 19/05, G05B 9/03

(54) **STEUERVORRICHTUNG, EIN SCHUTZMODUL FÜR EINE SOLCHE VORRICHTUNG SOWIE EIN ENTSPRECHENDES VERFAHREN**
CONTROL DEVICE, PROTECTION MODULE FOR SUCH CONTROL DEVICE AND A RESPECTIVE METHOD
DISPOSITIF DE COMMANDE, MODULE DE PROTECTION POUR UN TEL DISPOSITIF ET PROCÉDÉ CORRESPONDANT

(30) Priorität: 23.10.2020 DE 102020128026
(43) Veröffentlichungstag der Anmeldung: 27.04.2022
(73) Patentinhaber: Pilz GmbH & Co. KG, 73760 Ostfildern (DE)
(72) Erfinder: Gruber, Winfried, 73760 Ostfildern (DE)
(74) Vertreter: Witte, Weller & Partner Patentanwälte mbB

(56) Entgegenhaltungen:
- EP-A1- 3 455 681
- WO-A1-2015/052174
- DE-A1-102008 029 948
- Siemens: "Failsafe Modul F-CM AS-i Safety ST 3RK7136-6SC00-0BC1 SIMATIC", , 31. März 2017 (2017-03-31), XP055899439, Gefunden im Internet: URL:https://support.industry.siemens.com/c s/attachments/90265988/F-CM_AS-i_Safety_ST _ET200SP_Manual_de-DE.pdf [gefunden am 2022-03-09]
- Siemens: "SIMATIC ET 200SP Dezentrales Peripheriesystem ET 200SP Systemhandbuch", , 31. Juli 2014 (2014-07-31), Seiten 1-239, XP055899280, Gefunden im Internet: URL:https://support.industry.siemens.com/c s/attachments/58649293/et200sp_system_manu al_de-DE_de-DE.pdf?download=true [gefunden am 2022-03-09]

## Beschreibung

Die vorliegende Erfindung betrifft eine modulare Steuervorrichtung, ein Schutzmodul für eine solche Vorrichtung sowie ein entsprechendes Verfahren.

Steuervorrichtungen sind im Bereich der Automatisierungstechnik bekannt. Ihre Aufgabe ist das Steuern und Regeln von technischen Anlagen wie Maschinen oder Prozesse. Man unterscheidet zwischen verbindungsprogrammierten Steuerungen, die mittels einer festverdrahteten Logik Steuerungs- und Regelungsaufgaben wahrnehmen, und speicherprogrammierbaren Steuerungen, die frei programmierbar sind und so verschiedene Steuerungs- und Regelungsaufgaben ausführen können. Aufgrund ihrer Flexibilität und Anpassbarkeit haben sich Letztere für komplexe oder sich dynamisch ändernde Steuerungs- und Regelungsaufgaben der Prozess- und Automatisierungstechnik durchgesetzt.

Eine Steuervorrichtung bezeichnet man als modular, wenn sie sich aus einzelnen Komponenten zusammensetzt, die jeweils unterschiedliche Aufgaben erfüllen. In der Regel verfügt eine Steuerung mindestens über eine zentrale Recheneinheit, die auch als Kopfmodul bezeichnet wird. Das Kopfmodul bildet regelmäßig das erste Modul einer Modulreihe, die mindestens ein Eingangsmodul und mindestens ein Ausgangsmodul umfasst. Der Begriff Peripheriemodul fasst Eingangsmodule und Ausgangsmodule einheitlich zusammen. Die Eingangsmodule sind mit Gebern verbunden, um einen Zustand der technischen Anlage oder Maschine zu erfassen. Die Ausgangsmodule verfügen über Ausgänge, die mit Aktoren verbunden sind, um die technische Anlage oder Maschine gemäß der gewünschten Steuerungs- oder Regelaufgabe sowie in Abhängigkeit der Eingänge zu steuern. Die Steuervorrichtung ist regelmäßig als eine eigenständige Einheit mit einem Gehäuse oder einem Gehäuserahmen ausgebildet, in dem die Module in einer Reihe angeordnet sind.

Spezielle Steuerungen sind sichere Steuerungen (auch Sicherheitssteuerung oder Failsafe-(FS)-Steuerungen genannt). Diese erfüllen die gleichen Funktionen wie eine normale Steuerung, unterscheiden sich aber darin, dass sie zusätzlich sicherheitsgerichtete Aufgaben wahrnehmen. Sicherheitssteuerungen entstanden vor allem aus dem Wunsch heraus, Sicherheit ähnlich wie bei einer Standard-Steuerung per Programmierung verschalten zu können. In ihrer Funktion unterscheidet sich die Sicherheitssteuerung daher nur unwesentlich von Steuerungen für die Standardaufgaben. Intern jedoch verfügt die Sicherheitssteuerung über zusätzlich Hard- und Software, welche die sicherheitsgerichteten Funktionen wahrnehmen.

Eine Sicherheitssteuerung kann vereinfacht gesagt, aus zwei Standard-Steuerungen gebildet sein, die parallel ein Anwendungsprogramm abarbeiten, dasselbe Prozessabbild der Ein-/Ausgänge nutzen und sich ständig abgleichen. So zeichnet sich eine Sicherheitssteuerung unter anderem durch mindestens zwei getrennte Kanäle, einen diversitären Aufbau mit unterschiedlicher Hardware, ständigen Tests der Ein- und Ausgänge, ständigen Vergleichen der Anwenderdaten, einer Spannungs- und Zeitüberwachung sowie einem sicheren Abschaltverhalten im Fehler- oder Gefahrenfall aus.

Eine besondere Fehlerart, mit der auch Sicherheitssteuerungen konfrontiert sind, sind sogenannte Ausfälle aufgrund gemeinsamer Ursache (engl. common cause failures CCF), d.h. Ausfälle, die als Folge einer einzelnen Fehlerursache oder eines einzelnen Ereignisses auftreten. Fehler aufgrund gemeinsamer Ursachen sind dann von Bedeutung, wenn diese in unerwünschter Weise eine Redundanz eines sicherheitsrelevanten Teilsystems aufheben und so das Ausführen einer Sicherheitsfunktion verhindern. Bei Sicherheitssteuerungen, deren Grundprinzip das Bereitstellen von Redundanzen ist, ist das Auffinden und Ausschließen von Fehlern gemeinsamer Ursache daher von großer Bedeutung.

DE 10 2008 029948 A1 offenbart ein Überwachungssystem mit einem Ausgangsmodul zum Erzeugen eines Steuersignals, ansprechend auf ein Eingangssignal, einem Überwachungsmodul zum Erzeugen des Eingangssignals für das Ausgangsmodul, einer Ausgabeeinrichtung zum Ausgeben eines Ausgabesignals, ansprechend auf das Steuersignal, und einer Durchgriffseinrichtung zum Unterbinden der Ausgabe des Ausgabesignals, wobei das Überwachungmodul ausgebildet ist, bei Vorliegen einer Abweichung zwischen dem Steuersignal und einem auf der Basis des Eingangssignals zu erwartenden Steuersignal die Durchgriffseinrichtung anzuweisen, die Ausgabe des Ausgabesignals zu unterbinden.

Siemens, "Failsafe Modul F-CM AS-i Safety ST 3RK7136-6SC00-0BC1 SIMATIC", (20170331), URL: https://support.industry.siemens.com/cs/attachments/90265988/F-CM AS-i_Safety_ST_ET200SP_Manual_de-DE.pdf, beschreibt eine Baugruppe als Kommunikationsmodul für ein dezentrales Peripheriesystem. Das Modul liest Eingangszustände von sicherheitsgerichteten Aktor-Sensor-Schnittstellen-Eingangsmodulen ein und stellt diese Zustände einer fehlersicheren F-CPU zur weiteren Auswertung zur Verfügung. Ferner übernimmt das Modul in der Gegenrichtung sichere Ausgangszustände einer F-CPU entgegen und gibt diese zur Ansteuerung von sicherheitsgerichteten Ausgängen an der Aktor-Sensor-Schnittstelle aus.

Es ist eine Aufgabe der vorliegenden Erfindung eine Steuervorrichtung anzugeben, die besser gegen Ausfälle aufgrund gemeinsamer Ursache geschützt ist. Ferner ist es eine Aufgabe eine Steuervorrichtung anzugeben, die gegen Ausfälle aufgrund gemeinsamer Ursache geschützt ist und gleichzeitig flexible anpassbar ist. Schließlich ist es eine Aufgabe, eine Möglichkeit zur Verminderung von Ausfällen aufgrund von Fehlern gemeinsamer Ursache anzugeben, die bei bestehenden Steuervorrichtungen einfach nachrüstbar ist.

Gemäß einem Aspekt der vorliegenden Erfindung wird diese Aufgabe gelöst durch ein Schutzmodul zur Überwachung einer Funktionsfähigkeit eines Eingangsmoduls und eines Ausgangsmoduls einer Steuervorrichtung gemäß Anspruch 1.

Gemäß einem weiteren Aspekt der vorliegenden Erfindung wird die Aufgabe ferner gelöst durch eine Steuervorrichtung gemäß Anspruch 5, die ein solches Schutzmodul beinhaltet.

Schließlich wird die Aufgabe gemäß einem weiteren Aspekt der vorliegenden Erfindung durch ein Verfahren zur Steuerung einer technischen Anlage gemäß Anspruch 15 gelöst, das auf das vorstehende Schutzmodul zurückgreift.

Es ist somit eine Idee, bei einer modularen Steuervorrichtung mindestens ein Modul als Schutzmodul vorzusehen, das eine eigene, von einer Potentialgruppe der anderen Module getrennte Potentialgruppe definiert. Dieses Schutzmodul ist eingerichtet, direkt oder indirekt die Funktionsfähigkeit eines oder mehrerer Module der anderen Potentialgruppe zu überwachen. Funktionsfähigkeit beutet in diesem Zusammenhang, dass die Module in einem Zustand sind, in dem sie ihren ordnungsgemäßen Betrieb wahrnehmen können.

Eine Potentialgruppe ist hier definiert durch einen gemeinsamen Zugriff einer Gruppe von Modulen auf ein Spannungspotential bzw. eine gemeinsame Spannungsversorgung. Das gemeinsame Spannungspotential kann eine gemeinsame Betriebsspannungsversorgung sein oder sich auf eine gemeinsam genutzte Peripheriespannung, die in die Module eingespeist bzw. von diesen abgegeben wird, beziehen. Gemeinsam bedeutet hier, dass dasselbe Potential an verschiedenen Modulen anliegt und die Module hiervon Gebrauch machen können. Eine von dieser Potentialgruppe getrennte bzw. unabhängige Potentialgruppe ist eine Potentialgruppe, die zumindest galvanisch von dieser getrennt ist. Ein Modul, das zu einer anderen Potentialgruppe gehört, verfügt somit über einen Zugriff auf ein anderes Spannungspotential, welches von dem ersten Spannungspotential unabhängig ist. Das Schutzmodul kann eine eigene Betriebsspannungsversorgung aufweisen oder eine Peripheriespannung aus einer anderen Bezugsquelle aufnehmen als die Module der anderen Potentialgruppe.

Das Schutzmodul, oder zumindest einige Teile hiervon, sind folglich galvanisch von den anderen Modulen in dem modularen Aufbau getrennt. Gleichzeitig ist das Schutzmodul mit den anderen Modulen koppelbar, um diese überwachen und ggf. auf diese einwirken zu können. Das Schutzmodul und die anderen Module können über Kommunikationsschnittstellen miteinander verbunden sein, worüber zumindest das Schutzmodul einen Zustand der anderen Module bestimmen kann, um in Abhängigkeit des erfassten Zustands den von den anderen Modulen gesteuerten Prozess zu beeinflussen. Die Kommunikationsschnittstellen sind so eingerichtet, dass sie eine Trennung der ersten Potentialgruppe und der zweiten Potentialgruppe nicht durchbrechen. Mit anderen Worten können sich die Module der ersten Potentialgruppe und der zweiten Potentialgruppe auf einer logischen Ebene beeinflussen, ohne von dem gleichen Potential gespeist zu werden bzw. ohne auf eine gemeinsame Peripheriespannung für die Steuerung zurückgreifen zu müssen.

Der modulare Aufbau mit einem zusätzlichen Schutzmodul in der vorstehend beschriebenen Weise, hat den Vorteil, dass ein Fehler oder eine Unregelmäßigkeit hervorgerufen durch das die Potentialgruppe definierende Potential keinen Einfluss auf die Funktion des Schutzmoduls der anderen Potentialgruppe hat. Darüber hinaus ist das Schutzmodul eingerichtet, zumindest das Ausgangssignal des einen Ausgangsmoduls oder mehrerer Ausgangsmodule der anderen Potentialgruppe zu bestätigen. Damit kann das Schutzmodul bei einem Fehler, der von einem die Potentialgruppe definierenden Potential ausgelöst wird und damit alle Module betrifft, weiterhin steuernd auf die technische Anlage einwirken und diese in einen sicheren Zustand überführen. Beispielsweise kann das Schutzmodul die Anlage in einen sicheren Zustand überführen, indem es die Ausgänge abschaltet und die technische Anlage stilllegt. Fehler, die auf das definierende Potential einer Potentialgruppe zurückgehen, bspw. hervorgerufen durch eine defekte Stromversorgung oder eine Überspannung, sind auf diese Weise beherrschbar. Der vorgeschlagene Ansatz schließt somit eine weitere Quelle für Fehler gemeinsamer Ursache effektiv aus.

Das Schutzmodul integriert sich wie jedes weitere Modul in den modularen Aufbau der Steuervorrichtung. Änderungen an der Steuervorrichtung selbst sind somit nicht erforderlich. Die zusätzliche Schutzfunktion ist somit kostengünstig und effizient umsetzbar. Ferner können bestehende modulare Steuervorrichtungen einfach von dem zusätzlichen Schutz gegen Fehler gemeinsamer Ursache profitieren. Das Schutzmodul erweitert somit nicht nur den Schutzumfang neuer Steuervorrichtungen, sondern dient auch zur Ergänzung älterer Steuervorrichtungen um diese Funktion. Zudem ist das Schutzmodul durch die nahtlose Integration in die modulare Struktur flexible einsetzbar und für unterschiedliche Anwendungsfällen verwendbar.

In einer weiteren Ausgestaltung kann die erste Potentialgruppe das Ausgangssignal bereitstellen und die zweite Potentialgruppe kann ein Freigabesignal zur Bestätigung des Ausgangssignals bereitstellen.

Das Ausgangssignal und ein Signal, welches dieses bestätigt, entstammen somit unterschiedlichen Potentialgruppen. Ein Fehler in einer der Potentialgruppen führt somit nicht zu einem Kontrollverlust, da ein redundantes Signal aus einer anderen Potentialgruppe bereitgestellt wird.

In einer weiteren Ausgestaltung können das Eingangsmodul, das Ausgangsmodul und das Schutzmodul je ein Busmodulteil umfassen, über welches das Eingangsmodul, das Ausgangsmodul und das Schutzmodul miteinander verbunden sind, wobei das Busmodulteil des Schutzmoduls eine galvanische Trenneinrichtung aufweist, die eingerichtet ist, das Busmodulteil des Schutzmoduls von weiteren Komponenten des Schutzmoduls galvanisch zu trennen.

Für das Schutzmodul bedeutet diese Ausgestaltung, dass eine galvanische Trennung innerhalb des Schutzmoduls am Übergang zum Busmodulteil stattfindet. Das Busmodulteil, über welches eine Kommunikation mit den anderen Modulen der modularen Anordnung realisierbar ist, ist somit der ersten Potentialgruppe zugeordnet, die von der Potentialgruppe des Schutzmoduls verschieden ist. Diese Ausgestaltung ermöglicht es, das Schutzmodul einfach in bestehende Steuervorrichtungen zu integrieren, auch wenn diese über eine für die Module gemeinsame Backplane verfügen, welche die Kommunikationsverbindung zwischen den Modulen bereitstellt. Die galvanische Trennung findet somit im Schutzmodul statt und ist für die übrige Steuervorrichtung transparent.

In einer weiteren Ausgestaltung können das Eingangsmodul und das Ausgangsmodul eingerichtet sein, in definierten Abständen dem Schutzmodul eine Zustandsinformation zukommen zu lassen, wobei das Schutzmodul eingerichtet ist, das Ausgangssignal in Abhängigkeit der gesendeten Zustandsinformation zu bestätigen.

Das Schutzmodul kann in dieser Ausgestaltung somit nach dem Prinzip eines "Watchdogs" arbeiten. Nur wenn das Schutzmodul ein Signal als Lebenszeichen des Ein-oder Ausgangsmoduls empfängt, bestätigt das Schutzmodul das Ausgangssignal und erlaubt damit den Betrieb der technischen Anlage. Ein Watchdog lässt sich besonders leicht ohne Hardwareanpassung der Ein- und Ausgangsmodule implementieren.

In einer weiteren Ausgestaltung kann die erste Potentialgruppe neben dem Eingangsmodul und dem Ausgangsmodul ein oder mehrere weitere Module umfassen, die für eine Bereitstellung des Ausgangssignals relevant sind und die jeweils eingerichtet sind, das Signal in dem definierten Abstand zu senden, wobei das Schutzmodul dazu eingerichtet ist, in Abhängigkeit des Empfangs der Signale aller relevanten Module das Ausgangssignal zu bestätigen.

Das Schutzmodul kann somit mehrere Module überwachen. Unter anderem kann das Schutzmodul auch ein Kopfmodul, welches eine zentrale Recheneinheit umfasst, überwachen. Für eine Vielzahl von Modulen in einer Potentialgruppe ist daher ein einzelnes Schutzmodul ausreichend, um den zusätzlich Schutz gegen Fehler gemeinsamer Ursache zu implementieren. Die Umsetzung ist auf diese Weise sehr effizient möglich.

In einer weiteren Ausgestaltung kann das Schutzmodul einen ersten Versorgungsanschluss aufweisen, um mit einem Potential verbunden zu werden, welches die zweite Potentialgruppe bildet.

Das Schutzmodul kann somit einen eignen Anschluss zur Kopplung mit einer Spannungsversorgung umfassen, über die das Schutzmodul das die zweite Potentialgruppe definierende Potential aufnimmt. Das Schutzmodul verfügt demnach über einen von der übrigen Steuervorrichtung unabhängigen Versorgungsanschluss. Hierbei kann es sich bspw. um einen in der Automatisierungstechnik üblichen 24V-Anschluss handeln. Das Potential, welches die zweite Potentialgruppe definiert, kann der Art nach identisch zu dem Potential sein, welches die erste Potentialgruppe definiert.

In einer weiteren Ausgestaltung kann das Schutzmodul eine Ausgabe-Baugruppe aufweisen, die eingerichtet ist, das Ausgangssignal des Ausgangsmoduls der ersten Potentialgruppe bereitzustellen.

Gemäß dieser Ausgestaltung kann das Schutzmodul direkt Einfluss auf das Ausgangsmodul nehmen, indem es ein Potential für die Bereitstellung des Ausgangssignals zur Verfügung stellt. Anstelle das Ausgangssignal über ein weiteres, eigenes Signal zu bestätigen, erfolgt in diesem Fall die Bestätigung, indem das Schutzmodul das Potential für das Ausgangsmodul bereitstellt oder nicht. Dies vereinfacht unter anderem eine Verkabelung der Steuervorrichtung mit der Peripherie, da das Ausgangsmodul unverändert mit der Peripherie verbunden werden kann. Eine Kombination der einzelnen Signale des Ausgangsmoduls und des Schutzmoduls ist nicht erforderlich.

In einer weiteren Ausgestaltung kann das Schutzmodul hierfür einen zweiten Versorgungsanschluss aufweisen, der die Ausgabe-Baugruppe speist, wobei die Ausgabe-Baugruppe galvanisch von dem Schutzmodul getrennt ist. Zum Speisen des Ausgangsmoduls kann die Ausgabe-Baugruppe somit einen weiteren Versorgungsanschluss aufweisen. Ein erster Anschluss versorgt somit eine Logik-Baugruppe des Schutzmoduls und der zweite Anschluss die Ausgabe-Baugruppe. Die Ausgabe-Baugruppe und die Logik-Baugruppe sind voneinander galvanisch getrennt. Gleichzeitig sind die Logik-Baugruppe und die Ausgabe-Baugruppe so gekoppelt und zu einem Modul integriert, dass die Logik-Baugruppe die Ausgabe-Baugruppe steuern kann. Die Logik-Baugruppe ist eingerichtet, über die Ausgabe-Baugruppe die Bereitstellung eines Potentials für die mit der Ausgabe-Baugruppe gekoppelten Ausgangsmodule an- bzw. abzuschalten.

In einer weiteren Ausgestaltung ist das Schutzmodul mehrkanalig-redundant ausgebildet.

Wie bei sicheren (Peripherie-)Modulen üblich kann das Schutzmodul somit eine redundante Ausgestaltung der Logik-Baugruppe aufweisen, die eingerichtet ist, sich selbst zu überwachen. Auf diese Weise kann das Schutzmodul die Anforderungen einer hohen Sicherheitskategorie erfüllen und Fehler innerhalb des Moduls beherrschbar machen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert:
Fig. 1 zeigt eine schematische Darstellung eines ersten Ausführungsbeispiels einer Steuervorrichtung mit einem Schutzmodul.
Fig. 2 zeigt in einer schematischen Darstellung ein Ausführungsbeispiel eines Verfahrens zur Steuerung einer technischen Anlage mit einer Steuervorrichtung, die ein Schutzmodul aufweist.
Fig. 3 zeigt eine schematische Darstellung eines zweiten Ausführungsbeispiels einer Steuervorrichtung mit einem Einspeisemodul, das die Funktion eines Schutzmoduls wahrnimmt.
Fig. 4 zeigt eine schematische Darstellung eines ersten Ausführungsbeispiels eines Schutzmoduls für eine Steuervorrichtung.
Fig. 5 zeigt eine schematische Darstellung eines zweiten Ausführungsbeispiels eines Schutzmoduls in Form eines Einspeisemoduls für eine Steuervorrichtung.

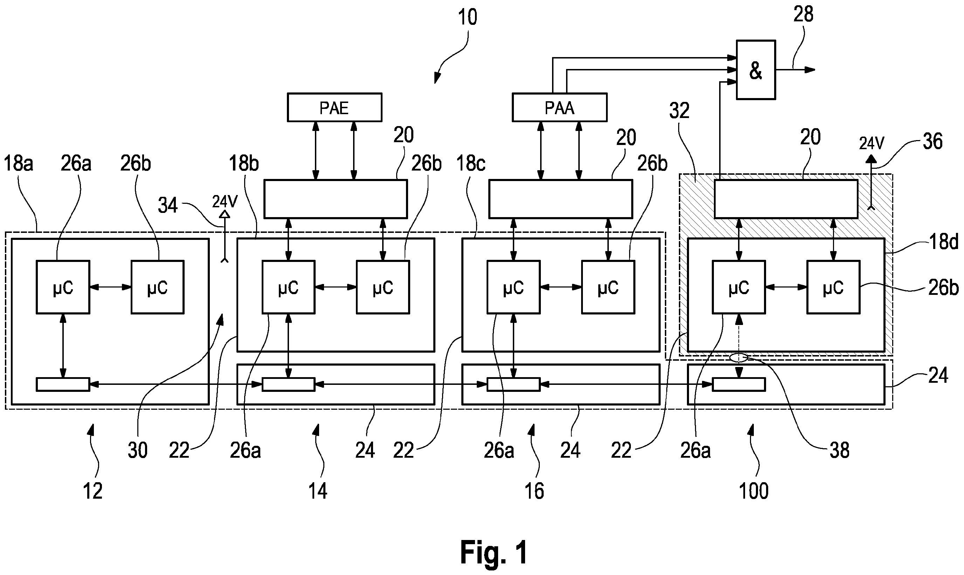

Fig. 1 zeigt ein erstes Ausführungsbeispiel eine Steuervorrichtung mit einem Schutzmodul. Die Steuervorrichtung ist in der Gesamtheit mit der Bezugsziffer 10 bezeichnet.

Die Steuervorrichtung 10 hat einen modularen Aufbau. Im vorliegenden Ausführungsbeispiel setzt sich die Steuervorrichtung aus vier einzelnen Modulen zusammen. Das erste Modul ist ein Kopfmodul 12, das zweite Module ist ein Eingangsmodul 14, das dritte Modul ist ein Ausgangsmodul 16 und das vierte Modul ist ein Schutzmodul 100.

Die Module können jeweils in eigenen Gehäusen (18a-18d) untergebracht sein und zu der Steuervorrichtung 10 kombiniert werden. Die Reihenfolge, in der die Module angeordnet sind, ist zunächst unerheblich und die Module müssen nicht in der hier dargestellten Reihenfolge angeordnet sein. Denkbar ist jedoch auch, dass in einem anderen Ausführungsbeispiel die Reihenfolge der nebeneinander angeordneten Module von Bedeutung ist. Auch die Anzahl der Module ist nicht auf die hier dargestellten vier Module beschränkt. Die Steuervorrichtung 10 kann eine Vielzahl weiterer Ein- und Ausgangsmodulen (Peripheriemodule) neben dem üblicherweise einzelnen Kopfmodul umfassen. Ferner sind weitere Module mit anderen Funktionen als die hier dargestellte Ein- und Ausgabe denkbar. Diese weiteren Module können in äquivalenter Weise von dem Schutzmodul profitieren. Die Steuervorrichtung 10 kann als eine eigenständige Einheit mit einem Gehäuse oder einem Gehäuserahmen ausgebildet sein, in dem die einzelnen Module in einer Reihe angeordnet sind. Das Gehäuse samt der einzelnen Module kann zentral in einem Schaltschrank platziert werden, wobei die Peripheriemodule direkt oder indirekt (bspw. über einen Feldbus) mit der Peripherie verbunden werden.

Ferner können die Module der Steuervorrichtung selbst auch modular aufgebaut sein. Der modulare Aufbau der einzelnen Module wird im Folgenden als vertikale Modularität bezeichnet, während der modulare Aufbau der Steuervorrichtung 10 mit den einzelnen Modulen innerhalb eines Gehäuses als horizontale Modularität bezeichnet wird.

Ein einzelnes Modul kann eine Ein-/Ausgabe-Baugruppe 20, eine Logik-Baugruppe 22 sowie eine Bus-Baugruppe 24 umfassen, die zu einem Modul integriert sind.

Die Ein-/Ausgabe-Baugruppe 20 eines Moduls implementiert die physische Schnittstelle zur Peripherie, um ein Prozessabbild der Eingänge PAE zu erfassen und Ausgänge bzgl. eines Prozessabbilds der Ausgänge PAA zu setzen. Eine Ein-/Ausgabe-Baugruppe umfasst eine Vielzahl von Anschlüssen zum Anschließen von Sensoren und Aktoren, um einerseits Eingangssignale von den Sensoren zu empfangen und andererseits Ausgangssignale an die Aktoren abzugeben. Ein- und Ausgabe kann, wie hier durch die Doppelfeile angedeutet, redundant erfolgen.

Die Logik-Baugruppe 22 eines Moduls bildet den Kern eines Moduls. In dieser Baugruppe findet die eigentliche Signalverarbeitung (Logik) durch entsprechende Signalverarbeitungseinrichtungen 26 statt. Die Verarbeitung umfasst die Bewertung der erfassten Zustände sowie das Bestimmen der vorzunehmenden Reaktion in Abhängigkeit der Bewertung. Die Signalverarbeitung kann durch Mikrocontroller (µC) erfolgen, ist aber nicht auf solche beschränkt. Andere Signalverarbeitungseinrichtungen wie CPU, GPU, ASIC etc. sind gleichermaßen denkbar. Zur Fehlervermeidung und/oder Fehlererkennung können die Module zwei oder mehrere Signalverarbeitungseinrichtungen 26 aufweisen, wie hier durch die Suffixe a und b für die einzelnen Module angedeutet ist. Die Signalverarbeitungseinrichtungen 26 können die Ein- und Ausgangssignale parallel verarbeiten bzw. erzeugen, sich gegenseitig abgleichen und überwachen. Man spricht in diesem Zusammenhang auch von einer mehrkanalig-redundanten Auslegung. Eine mehrkanalig-redundanten Auslegung der einzelnen Module ist die bekannteste Auslegung zur Bereitstellung einer fehlersicheren Einrichtung.

Die Bus-Baugruppe 24 bildet die Kommunikationsschnittstelle zu den anderen Modulen. Neben einer Kommunikationsverbindung zu den Signalverarbeitungseinrichtungen 26 eines Moduls umfasst die Bus-Baugruppe 24 jeweils Querverbindungen zu den benachbarten Bus-Baugruppen der nebenliegenden Module. Auf diese Weise bilden die nebeneinander geschalteten Bus-Baugruppen 24 einen Kommunikationsbus, über den die Module der Steuervorrichtung miteinander kommunizieren können. Die Signalverarbeitungseinrichtungen 26 des Eingangsmoduls 14, des Ausgangsmoduls 16 sowie des Schutzmoduls 100 können über den Bus Daten austauschen. Ebenso kann das Kopfmodul 12 über den Bus Daten mit den anderen Modulen austauschen. Die Bus-Baugruppen 24 sind hier jeweils als Modulteile der einzelnen Module ausgebildet. Denkbar ist jedoch auch, dass die Bus-Baugruppen 24 als eine einzelne Backplane ausgebildet sind, die mit dem Kopfmodul gekoppelt ist und auf die die einzelnen Module aufsteckbar sind.

Das Schutzmodul 100 hat einen ähnlichen Aufbau wie ein Peripheriemodul und lässt sich entsprechend wie ein weiteres Peripheriemodul in den modularen Aufbau der Steuervorrichtung integrieren. Wie die Peripheriemodule hat das Schutzmodul 100 mindestens eine Logik-Baugruppe 22 sowie eine Bus-Baugruppe 24. Ferner kann das Schutzmodul 100 in verschiedenen Ausführungsformen eine Ein-/Ausgabe-Baugruppe 20 aufweisen.

Die Signalverarbeitungseinrichtungen 26 des Schutzmoduls 100 tauschen Daten und Signale mit den Peripheriemodulen 14, 16 und dem Kopfmodul 12 aus. Wie im Nachfolgenden noch beschrieben wird, überwacht das Schutzmodul 100 die ordnungsmäßige Funktion der Peripheriemodule 14, 16 und des Kopfmoduls 12. Im Falle eines ordnungsmäßigen Betriebs der Peripheriemodule 14, 16 und des Kopfmoduls 12 bestätigt das Schutzmodul 100 die Ausgangssignale der Ausgangsmodule. Zu diesem Zweck kann das Schutzmodul 100 eine eigene Ausgabe-Baugruppe umfassen, die in Abhängigkeit der Signalverarbeitung der Logik-Baugruppe ein zusätzliches Ausgangssignal bereitstellt. Die Bestätigung der Ausgangssignale der Ausgangsmodule der Steuervorrichtung kann dann über eine "UND"-Verknüpfung dieser Ausgangssignale erfolgen, sodass ein verknüpftes Ausgangssignal 28 nur dann erzeugt wird, wenn das Ausgangssignal des Schutzmoduls sowie die zu bestätigenden Ausgangssignale an der "UND"-Verknüpfung anliegen. Es versteht sich, dass dies nur eine Möglichkeit zur Bestätigung des Ausgangssignals darstellt.

Die Steuervorrichtung 10 umfasst zwei Potentialgruppen. Die erste Potentialgruppe 30 beinhaltet hier das Kopfmodul 12, das Eingangsmodul 14 sowie das Ausgangsmodul 16. Die zweite Potentialgruppe 32 umfasst die Logik-Baugruppe und die Ausgabe-Baugruppe des Schutzmoduls 100. Zur Verdeutlichung ist der Bereich der zweiten Potentialgruppe 32 schraffiert dargestellt.

Ein erster Versorgungsspannungsanschluss 34 speist die erste Potentialgruppe 30 und ist bspw. am Kopfmodul angeordnet. Ein zweite Versorgungsanschluss 36 speist die zweite Potentialgruppe 32 und ist am Schutzmodul 100 angeordnet. Die zugehörigen Potentiale der Potentialgruppen 30, 32 können der Art nach identisch sein und bspw., wie hier dargestellt, 24V betragen. Darüber hinaus sind die Potentialgruppen 30, 32 unabhängig voneinander und innerhalb der Steuervorrichtung galvanisch voneinander getrennt. Es versteht sich, dass eine Aufteilung der Potentialgruppen 30, 32 nicht auf die hier dargestellte Aufteilung beschränkt ist, solange zumindest das Ausgangssignal des Schutzmoduls von einer anderen Potentialgruppe gespeist wird, als die Ausgangssignale der zu überwachenden Module.

Indem das Schutzmodul als eigenständiges Modul ausgebildet ist, kann eine Trennung der Potentialgruppen 30, 32 einfach erreicht werden. Das Schutzmodul muss lediglich dazu eingerichtet sein, mit den anderen Modulen kommunizieren zu können. Durch eine entsprechende Kommunikationsschnittstelle mit Trenneinrichtung 38 ist dies möglich, ohne die galvanische Trennung der Potentialgruppen aufzuheben. Die Trenneinrichtung 38 der Kommunikationsschnittstelle kann bspw. über einen Optokoppler realisiert werden, der eine Signalübertragung zwischen zwei galvanisch getrennten Stromkreisen ermöglicht. Ein Optokoppler wird üblicherweise aus einer Leuchtdiode (LED) oder Laserdiode (LD) als optischem Sender und einer Photodiode oder einem Fototransistor als optischem Empfänger gebildet.

Die Trenneinrichtung 38 der Kommunikationsschnittstelle ist in der Ausführung gemäß Fig. 1 zwischen der Logik-Baugruppe 22 und der Bus-Baugruppe 24 angeordnet. Es versteht sich, dass auch andere Anordnungen der Trenneinrichtung 38 denkbar sind. In einem anderen Ausführungsbeispiel kann die Trenneinrichtung 38 bspw. auch in die Bus-Baugruppe 24 integriert sein, wobei je die Querverbindungen eine galvanische Trennung beinhalten.

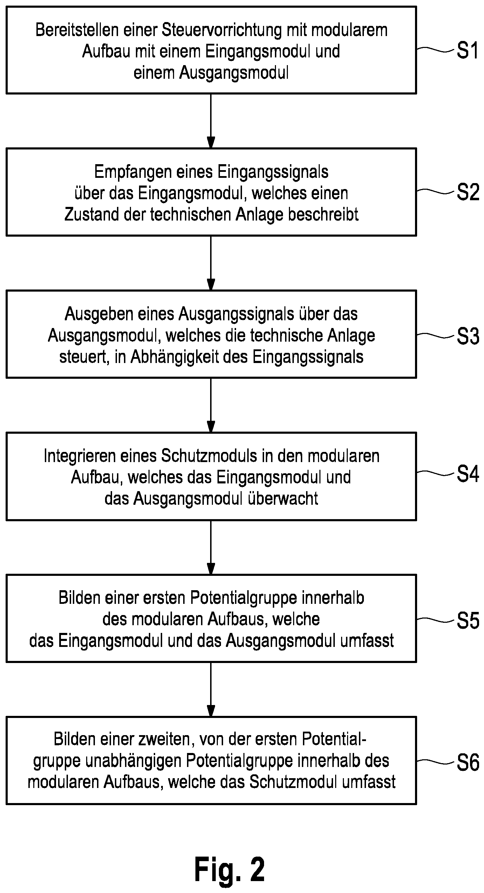

Mit Bezug auf die Fig. 2 wird im Folgenden die Funktionsweise der Steuervorrichtung 10 näher beschrieben. Fig. 2 zeigt in einer schematischen Darstellung ein Ausführungsbeispiel eines Verfahrens zur Steuerung einer technischen Anlage mit einer Steuervorrichtung, die ein Schutzmodul aufweist.

Das Verfahren umfasst das Bereitstellen einer Steuervorrichtung mit modularem Aufbau nach einem Ausführungsbeispiel dieser Offenbarung mit mindestens einem Eingangsmodul und einem Ausgangsmodul (S1).

Über das Eingangsmodul empfängt die Steuervorrichtung mindestens ein Eingangssignal (S2), welches einen Zustand der technischen Anlage repräsentiert. Das Eingangssignal kann ein Signal eines Sicherheitssensors sein, bspw. einer Lichtschranke oder eines Not-Aus-Schalters. Die Summe der Eingangssignale ergibt das Prozessabbild der Eingänge PAE und spiegelt somit den Zustand der technischen Anlage wieder.

Über das Ausgangsmodul gibt die Steuervorrichtung mindestens ein Ausgangssignal zum Steuern von Aktoren aus. Die Summe der Ausgangssignale wird durch das Prozessabbild der Ausgänge PAA bestimmt. Die Aktoren können bspw. Schütze in einer Stromversorgung der technischen Anlage sein, die nur bei Vorhandensein des Ausgangssignals eine Stromversorgung der technischen Anlage freigeben. Es versteht sich, dass das Abschalten der technischen Anlage nur eine Möglichkeit darstellt, die technische Anlage in einen sicheren Zustand zu überführen. In einem anderen Ausführungsbeispiel kann das Ausgangssignal auch eine anderweitige Steuerfunktion auslösen, die die technische Anlage in eine den Bedingungen entsprechende sichere Stellung verfährt, ohne die Anlage stromloszuschalten.

Ferner beinhaltet das Verfahren das Integrieren eines Schutzmoduls in den modularen Aufbau der Steuervorrichtung (S4). Das Schutzmodul ist eingerichtet, zumindest die Funktionsfähigkeit der Peripheriemodule, d.h. des Eingangsmoduls und des Ausgangsmoduls, zu überwachen. In einem anderen Ausführungsbeispiel kann das Schutzmodul auch noch weitere Module bspw. das Kopfmodul überwachen. Einzelheiten des Überwachungsvorgangs werden nachfolgend noch näher erläutert.

Die letzten Schritte des Verfahrens (S5, S6) beinhalten das Bilden von definierten Potentialgruppen innerhalb des modularen Aufbaus. Die getrennten Potentialgruppen ermöglichen eine unabhängige Überwachung der Module durch das Schutzmodul, sodass Fehler in der Stromversorgung der Module sich nicht gleichsam auf die Module auswirken können.

Im Schritt S5 wird eine erste Potentialgruppe gebildet, die mindestens die Peripheriemodule umfasst. Die erste Potentialgruppe definiert sich bspw. durch das Anlegen einer Versorgungsspannung an einen Versorgungsanschluss der Module.

Im Schritt S6 wird anschließend eine zweite Potentialgruppe gebildet, die das Schutzmodul umfasst. Die zweite Potentialgruppe ist unabhängig von der ersten Potentialgruppe innerhalb des modularen Aufbaus der Steuervorrichtung. Das Schutzmodul verfügt somit zumindest über einen von den anderen Modulen galvanisch getrennten Stromkreis zum Betrieb der Überwachung sowie der Bereitstellung der Bestätigung des Ausgangssignals. Das Schutzmodul kann zum Bilden der zweiten Potentialgruppe über einen weiteren Versorgungsanschluss mit einer Versorgungsspannung gekoppelt sein.

Im Folgenden wird ein möglicher Überwachungsvorgang des Schutzmoduls beschrieben. Bei diesem Vorgang arbeitet das Schutzmodul nach dem Prinzip eines "Watchdog". Hierbei senden die zu überwachenden Module kontinuierlich in definierten Abständen ein Signal aus, das die Funktionsfähigkeit des Moduls anzeigt. Ein solches Signal wird auch als "Heartbeat"-Signal bezeichnet. Nur wenn das Schutzmodul das Heartbeat-Signal erwartungsgemäß empfängt, stimmt das Schutzmodul dem Ausgang der Steuervorrichtung zu. Zustimmen kann bspw. über eine "UND"-Verknüpfung eines Ausgangssignals des Schutzmoduls mit den Ausgängen der Steuervorrichtung erfolgen, sodass eine Betriebsfreigabe nur dann erfolgt, wenn alle Ausgangsignale sowohl der Steuerung als auch des Schutzmoduls vorhanden sind. Wenn das Schutzmodul kein Heartbeat-Signal empfängt, unterlässt es die Bestätigung der Ausgabe der Steuervorrichtung. Dies führt dazu, dass die technische Anlage in einen sicheren Zustand überführt wird oder in einem solchen verbleibt. Bspw. kann dies herbeigeführt werden, indem die Ausgänge der Steuervorrichtung Schütze in einer Stromversorgung der technischen Anlage ansteuern, die nur bei Vorhandensein eines Ausgangssignals der Steuervorrichtung anziehen und die technische Anlage mit einer Spannung versorgen. Fallen die Schütze hingegen ab, weil kein Ausgangssignal vorhanden ist, ist die technische Anlage stromlos und somit ungefährlich für eine Person. Es versteht sich, dass diese Möglichkeit nur ein Beispiel darstellt, wie ein sicherer Zustand einer technischen Anlage erreicht werden kann. So sind aus dem Bereich der Sicherheitstechnik weitere Möglichkeiten bekannt, wie mit Hilfe eines Ausgangssignals ein sicherer Zustand hergestellt werden kann. Die hier vorgeschlagene Steuervorrichtung ist nicht auf ein bestimmtes Vorgehen beschränkt.

Ebenso stellt auch das Watchdog-Prinzip nur eine Möglichkeit dar, die Module zu überwachen. So ist neben der direkten Überwachung einzelner Peripheriemodule bspw. auch eine indirekte Überwachung realisierbar. Bei der indirekten Überwachung wird nur ein Modul (bspw. das Kopfmodul der Steuervorrichtung) nach dem vorstehenden Prinzip stellvertretend für die weiteren Module überwacht. Ist bspw. das Kopfmodul eingerichtet, die zugehörigen Peripheriemodule zu überwachen und im Fehlerfall die Ausgänge abzuschalten, kann es insgesamt ausreichen, nur das Kopfmodul zu überwachen, um indirekt eine Überwachung der Peripheriemodule zu ermöglichen.

Ferner kann in einer Weiterbildung auch das Schutzmodul eingerichtet sein, ein Heartbeat-Signal auszusenden, um die eigene Funktionsfähigkeit den anderen Modulen der Steuervorrichtung anzuzeigen. Bspw. kann das Schutzmodul ein Heartbeat-Signal an ein Kopfmodul der Steuervorrichtung senden und das Kopfmodul veranlasst das Abschalten der Ausgänge, wenn das Heartbeat-Signal nicht erwartungsgemäß empfangen wird. Auf diese Weise überwachen die anderen Module das Schutzmodul und veranlassen das Einnehmen eines sicheren Zustands, falls in der Potentialgruppe des Schutzmoduls ein Fehler auftreten sollte. Die Module der Steuervorrichtung und das Schutzmodul können sich in dieser Ausgestaltung somit gegenseitig überwachen, wobei aufgrund der Zugehörigkeit zu getrennten Potentialgruppen Fehler gemeinsamer Ursache besser erkannt werden können.

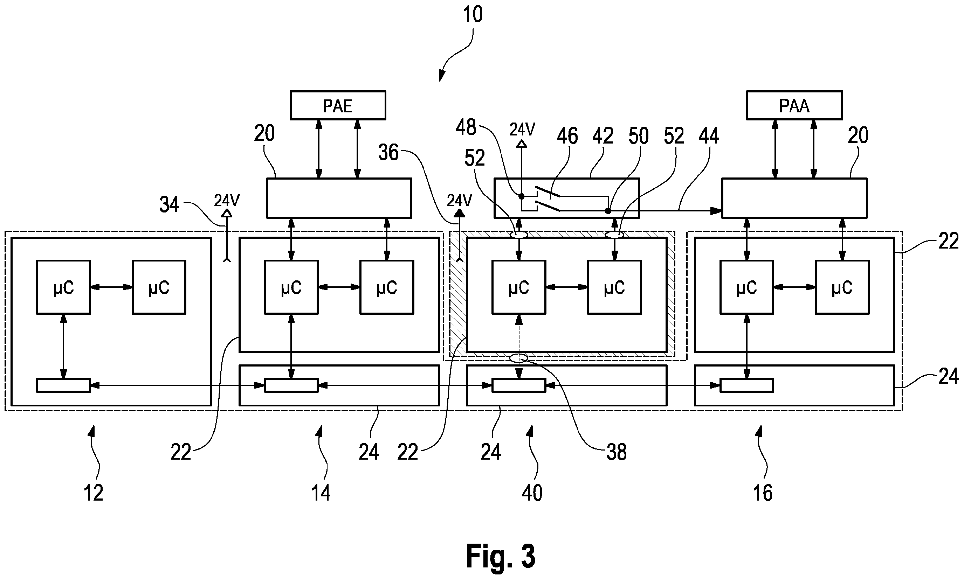

Das Bestätigen durch das Schutzmodul kann in der vorstehend genannten Weise erfolgen. Mit anderen Worten, das Schutzmodul hat eine eigene Ausgabe-Baugruppe und stellt in Abhängigkeit der Überwachung der anderen Module ein eigenes Ausgangssignal bereit, welches mit den eigentlichen Ausgangssignalen der Steuervorrichtung verknüpft wird. Eine alternative Ausgestaltung wird mit Bezug auf Fig. 3 im Folgenden beschrieben.

Fig. 3 zeigt eine schematische Darstellung eines zweiten Ausführungsbeispiels einer Steuervorrichtung mit einem Einspeisemodul, das die Funktion eines Schutzmoduls wahrnimmt. Gleiche Bezugsziffern bezeichnen gleiche Teil wie zuvor in Fig. 1.

Wie das Ausführungsbeispiel nach Fig. 1, umfasst auch das Ausführungsbeispiel gemäß Fig. 3 eine Steuervorrichtung 10 mit einem Kopfmodul 12, einem Eingangsmodul 14 und einem Ausgangsmodul 16. Die Module arbeiten und kommunizieren untereinander in der zuvor mit Bezug auf Fig. 1 beschriebenen Weise. Ebenfalls sind die Module in der zuvor beschriebenen Weise in dem modularen Aufbau zu einer ersten Potentialgruppe zusammengefasst. Das Kopfmodul 12, das Eingangsmodul 14 und das Ausgangsmodul 16 werden von einem erste Versorgungsspannungsanschluss 34 gespeist.

Im Unterschied zum Ausführungsbeispiel gemäß Fig. 1 verfügt die Steuervorrichtung 10 gemäß dem Ausführungsbeispiel nach Fig. 3 über ein zusätzliches Einspeisemodul 40. Das Einspeisemodul 40 ist dazu eingerichtet, eine externe Peripheriespannung aufzunehmen und für die Bereitstellung der Ausgangsignale zur Verfügung zu stellen. Die Ausgangsmodule 16 der Steuervorrichtung können somit ihre Ausgangsignale aus der externen Peripheriespannung speisen, ohne auf die Spannungsversorgung der Steuervorrichtung zurückgreifen zu müssen. Mit der Hilfe von Einspeisemodulen kann eine Steuervorrichtung einfach skaliert werden, da die Anzahl er Ausgänge nicht durch die eigene Stromversorgung der Steuervorrichtung beschränkt ist.

Das Einspeisemodul 40 umfasst eine Ein-/Ausgabe-Baugruppe 42, die eingerichtet ist, eine externe Peripheriespannung zu empfangen und an andere Module weiterzuleiten. Die Weiterleitung kann über eine gesonderte Verkabelung oder aber durch eine spezielle Kopplung der Ein-/Ausgabe-Baugruppe 42 mit der Ein-/Ausgabe-Baugruppe eines benachbarten Moduls erfolgen. Die Weiterleitung einer externen Peripheriespannung ist hier schematisch durch den Pfeil 44 angedeutet.

Die Ein-/Ausgabe-Baugruppe 42 ist ferner dazu eingerichtet, die Weiterleitung ein- und ausschalten zu können. Bspw. verfügt die Ein-/Ausgabe-Baugruppe 42 über ein Schaltelement 46 zwischen einem Eingangsanschluss 48 der externen Peripheriespannung und einem Ausgangsanschluss 50 zu den benachbarten Modulen. Wie hier dargestellt, kann das Schaltelement 46 redundant ausgelegt sein.

Das Schaltelement 46 kann von einer Logik-Baugruppe 22 des Einspeisemoduls 40 betätigt werden. Mit anderen Worten kann die Logik-Baugruppe 22 des Einspeisemoduls 40 eingerichtet sein, die Weiterleitung der externen Peripheriespannung ein- und auszuschalten. Nur wenn die Logik-Baugruppe 22 die Weiterleitung erlaubt, können die Ausgangsmodule, die ihr Ausgangssignal aus der externen Peripheriespannung speisen, ihre Ausgänge setzen. Die Logik-Baugruppe 22 kann durch das Kontrollieren der Weiterleitung somit auf einfache Weise die Ausgangssignale der abhängigen Ausgangsmodule bestätigen.

Gemäß dem Ausführungsbeispiel nach Fig. 3 ist das Einspeisemodul 40 so eingerichtet, dass die Logik-Baugruppe 22 einer anderen Potentialgruppe zugeordnet ist als die übrigen Module. Hierfür kann ein zweiter Versorgungsanschluss 36 vorgesehen sein, der nur die Logik-Baugruppe 22 speist, sowie zusätzliche Trenneinrichtungen 52, die die Logik-Baugruppe 22 von den anderen Baugruppen und Modulen trennen. Auf diese Weise wird um die Logik-Baugruppe 22 eine zweite Potentialgruppe 32 gebildet, die von der ersten Potentialgruppe 30 unabhängig ist.

Die Logik-Baugruppe 22 kann ferner die gleiche Funktion wahrnehmen wie die Logik-Baugruppe 22 des Schutzmoduls 100 gemäß Fig. 1. Das Einspeisemodul 42 ist somit in der Lage einen der oben beschriebenen Überwachungsvorgänge auszuführen, wobei die Bestätigung der Ausgänge über die gesteuerte Weiterleitung der externen Peripheriespannung erfolgt. Mit anderen Worten ist gemäß dem Ausführungsbeispiel nach Fig. 3 ein Einspeisemodul 40 durch das Bereitstellen einer eigenen Potentialgruppe um die Aufgaben eines Schutzmoduls erweiterbar. Einspeisemodul und Schutzmodul sind auf diese Weise zu einem Modul integriert, wodurch die Steuervorrichtung kleiner und einfacher ausgestaltet sein kann. Gleichzeitig ist ein effektiver Schutz gegen Fehler gemeinsamer Ursache möglich.

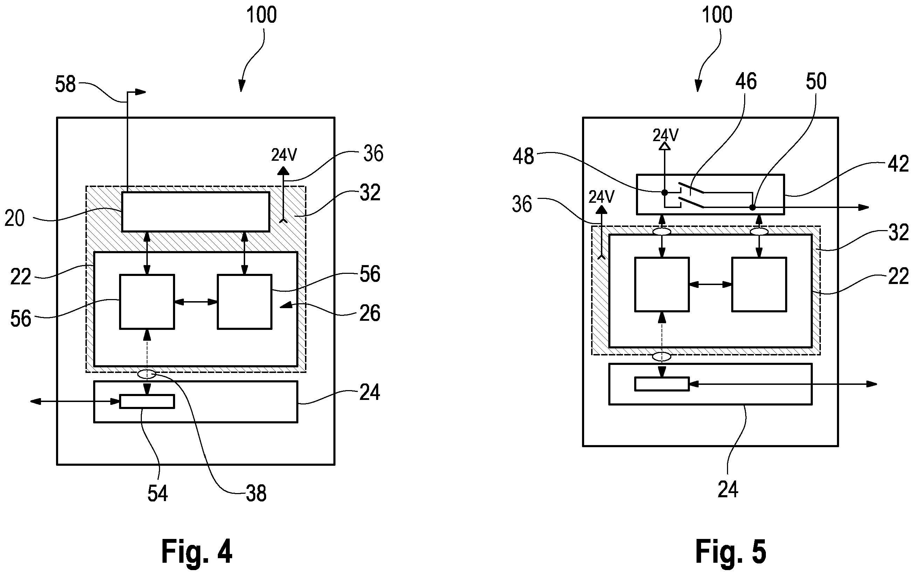

Fig. 4 und Fig. 5 zeigen abschließend je eine Ausführungsform eines Schutzmoduls 100.

Fig. 4 zeigt eine schematische Darstellung eines ersten Ausführungsbeispiels eines Schutzmoduls für eine Steuervorrichtung. Das Schutzmodul entspricht dem Schutzmodul wie es in Bezug auf die Fig. 1 beschrieben worden ist. Gleiche Bezugsziffern bezeichnen gleiche Teile wie zuvor.

Das Schutzmodul 100 ist hier ein eigenständiges Schutzmodul zur Überwachung weiterer Module einer Modulanordnung. In der dargestellten Ausführungsform umfasst das Schutzmodul drei Baugruppen, die als eigenständige Komponenten ausgebildet sein können und sich zu dem Schutzmodul zusammensetzen lassen. Eine eigenständige Komponente ist in diesem Zusammenhang eine Komponente, die nicht für das Schutzmodul spezifisch ist, sondern auch bei anderen Modulen verwendet werden kann.

Eine erste Baugruppe ist eine Bus-Baugruppe 24, die eine Kommunikationsschnittstelle 54 umfasst. Über die Kommunikationsschnittstelle 54 kann die Bus-Baugruppe mit den zu überwachenden Modulen kommunizieren und Signale von diesen empfangen.

Die zweite Baugruppe ist eine Logik-Baugruppe 22 mit einer Signalverarbeitungseinrichtung 26. Die Signalverarbeitungseinrichtung 26 wertet die von den zu überwachenden Modulen empfangenen Signale aus und verifiziert den ordnungsgemäßen Betrieb der Module. Die Auswertung kann redundant durch zwei getrennte, sich gegenseitig abgleichende und überwachende Signalverarbeitungseinheiten 56 erfolgen.

Die dritte Baugruppe ist eine Ausgabe-Baugruppe 42. Über die Ausgabe-Baugruppe 42 kann das Schutzmodul in Abhängigkeit der empfangenen Signale ein Ausgangssignal bereitstellen. Das Ausgangssignal des Schutzmoduls dient der Bestätigung eines oder mehrerer Ausgangssignale eines zu überwachenden Ausgangsmoduls der Steuervorrichtung. Das Ausgangssignal kann ein Freigabesignal 58 sein, das zusätzlich zu den eigentlichen Ausgangssignalen der Steuervorrichtung vorliegen muss, um den Betrieb der technischen Anlage, die durch die Steuervorrichtung kontrolliert wird, freizugeben.

Das Schutzmodul bildet eine eigenständige Potentialgruppe 32 innerhalb der Steuervorrichtung, in der das Modul eingesetzt wird. Eigenständig bedeutet in diesem Zusammenhang, dass die Potentialgruppe 32 getrennt und unabhängig von einer Potentialgruppe ist, aus der sich die übrigen Module der Steuervorrichtung speisen. Das heißt, zumindest ein Stromkreis innerhalb des Schutzmoduls, der zuständig für die Überwachung und Freigabe ist, ist galvanisch von einem Stromkreis der übrigen Module getrennt. Die Trennung kann über eine Trenneinrichtung 38 erfolgen. Zum Erzeugen der Potentialgruppe kann das Schutzmodul über einen Versorgungsanschluss 34 verfügen, über den das Schutzmodul 100 ein die Potentialgruppe 32 definierendes Potential aufnimmt.

Fig. 5 zeigt eine schematische Darstellung eines zweiten Ausführungsbeispiels eines Schutzmoduls in Form eines Einspeisemoduls für eine Steuervorrichtung.

Das Schutzmodul gemäß Fig. 5 beruht auf dem gleichen Wirkprinzip wie das Schutzmodul gemäß Fig. 4 und ist ebenfalls in drei Baugruppen unterteilt. Die Bus-Baugruppe 24 und die Logik-Baugruppe 22 sind identisch zu den entsprechenden Baugruppen des Schutzmoduls gemäß Fig. 4. Das Schutzmodul 100 gemäß Fig. 5 unterscheidet sich jedoch in der Ausgabe-Baugruppe 42.

Die Ausgabe-Baugruppe 42 umfasst in diesem Ausführungsbeispiel einen Anschluss 48 zum Aufnehmen eines Potentials sowie einen Anschluss 50, um dieses Potential an ein benachbartes Modul weiterzuleiten. Über das in die Ausgabe-Baugruppe 42 eingespeiste Potential kann ein benachbartes Modul ein Ausgangssignal bereitstellen. Zudem verfügt die Ausgabe-Baugruppe 42 über ein Schaltelement 46 zwischen dem Anschluss 48 und dem Anschluss 50, um ein Verbindung zwischen den beiden Anschlüssen trennen zu können. Das Schaltelement 46 kann von der Logik-Baugruppe 22 gesteuert werden, sodass das Schutzmodul 100 eingerichtet ist, eine Weiterleitung des eingespeisten Potentials zu unterbinden. Auf diese Weise kann das Schutzmodul ein Ausgangssignal jenes Moduls bestätigen, das zur Bereitstellung seines Ausgangssignals auf das eingespeiste Potential zurückgreift.

Wie bei dem Schutzmodul gemäß Fig. 4 ist auch die Logik-Baugruppe 22 des Schutzmoduls gemäß Fig. 5 in einer eigenständigen Potentialgruppe 32 angeordnet, um in der zuvor beschriebenen Weise eine unabhängige Überwachung gewährleisten zu können.

Sowohl das Schutzmodul gemäß Fig. 4 als auch das Schutzmodul gemäß Fig. 5 ermöglichen es, innerhalb einer Steuervorrichtung, in der die Module eingesetzt werden, eine bestimmte Quelle an Fehlern gemeinsamer Ursache effektiv auszuschließen.

## Patentansprüche

1. Schutzmodul (100) zur Überwachung einer Funktionsfähigkeit eines Eingangsmoduls und eines Ausgangsmoduls einer Steuervorrichtung (10) mit modularem Aufbau, umfassend:
eine Bus-Baugruppe (24), die eingerichtet ist, eine Zustandsinformation von dem Eingangsmodul (14) und dem Ausgangsmodul (16) zu empfangen,
eine Logik-Baugruppe (22), die eingerichtet ist, die Zustandsinformation von dem Eingangsmodul (14) und dem Ausgangsmodul (16) zu evaluieren,
eine Ausgabe-Baugruppe (20; 42), die eingerichtet ist, basierend auf der Evaluierung ein Ausgangssignal des Ausgangsmoduls (16) zu bestätigen,
wobei das Eingangsmodul (14) und das Ausgangsmodul (16) innerhalb des modularen Aufbaus eine erste Potentialgruppe (30) bilden, und
wobei zumindest die Logik-Baugruppe (22) des Schutzmoduls (100) eine zweite von der ersten Potentialgruppe unabhängige Potentialgruppe (32) innerhalb des modularen Aufbaus bildet.

2. Schutzmodul (100) nach Anspruch 1, ferner umfassend:
eine Trenneinrichtung (38; 52), die dazu eingerichtet ist, einen Stromkreis in der Logik-Baugruppe (22) von einem Stromkreis der Ausgabe-Baugruppe (42) und/oder der Bus-Baugruppe (24) galvanisch zu trennen.

3. Schutzmodul (100) nach Anspruch 1 oder 2, wobei die Ausgabe-Baugruppe (42) einen Anschluss (48) zum Aufnehmen einer externen Peripheriespannung aufweist und eingerichtet ist, mittels der externen Peripheriespannung das Ausgangssignal des Ausgangsmoduls (16) zu speisen.

4. Schutzmodul (100) nach Anspruch 3, wobei die Logik-Baugruppe (22) dazu eingerichtet ist, ein Speisen des Ausgangssignals aus der externen Peripheriespannung zu unterbinden.

5. Steuervorrichtung (10) mit modularem Aufbau zur Steuerung einer technischen Anlage, umfassend:
ein Eingangsmodul (14), das eingerichtet ist, ein Eingangssignal, welches einen Zustand der technischen Anlage beschreibt, zu empfangen, und
ein Ausgangsmodul (16), das eingerichtet ist, ein Ausgangssignal, welches die technische Anlage steuert, in Abhängigkeit des Eingangssignals auszugeben,
ein Schutzmodul (100) gemäß einem der Ansprüche 1 bis 4.

6. Steuervorrichtung nach Anspruch 5, wobei die erste Potentialgruppe (30) das Ausgangssignal bereitstellt und die zweite Potentialgruppe (32) ein Signal zur Bestätigung des Ausgangssignals bereitstellt.

7. Steuervorrichtung nach einem der Ansprüche 5 oder 6, wobei das Eingangsmodul (14), das Ausgangsmodul (16) und das Schutzmodul (100) je ein Busmodulteil (24) umfassen, über welches das Eingangsmodul (14), das Ausgangsmodul (16) und das Schutzmodul (100) miteinander verbunden sind, wobei das Busmodulteil des Schutzmoduls (100) eine galvanische Trenneinrichtung (38) aufweist, die eingerichtet ist, das Busmodulteil des Schutzmoduls (100) von weiteren Komponenten des Schutzmoduls (100) galvanisch zu trennen.

8. Steuervorrichtung nach einem der Ansprüche 5 bis 7, wobei das Eingangsmodul (14) und das Ausgangsmodul (16) eingerichtet sind, in definierten Abständen dem Schutzmodul (100) die Zustandsinformation zukommen zu lassen, wobei das Schutzmodul (100) eingerichtet ist, das Ausgangssignal in Abhängigkeit der Zustandsinformation zu bestätigen.

9. Steuervorrichtung nach einem der Ansprüche 5 bis 8, wobei die erste Potentialgruppe (30) neben dem Eingangsmodul (14) und dem Ausgangsmodul (16) ein oder mehrere weitere Module umfasst, die für eine Bereitstellung des Ausgangssignals relevant sind und die jeweils eingerichtet sind, die Zustandsinformation in dem definierten Abstand zu senden, wobei das Schutzmodul (100) dazu eingerichtet ist, in Abhängigkeit des Empfangs der Zustandsinformationen aller relevanten Module das Ausgangssignal zu bestätigen.

10. Steuervorrichtung nach einem der Ansprüche 5 bis 9, wobei das Schutzmodul (100) einen ersten Versorgungsanschluss (34) aufweist, um mit einem Potential verbunden zu werden, welches die zweite Potentialgruppe (32) bildet.

11. Steuervorrichtung nach einem der Ansprüche 5 bis 10, wobei das Schutzmodul (100) eine Ausgabe-Baugruppe (42) aufweist, die eingerichtet ist, das Ausgangssignal des Ausgangsmoduls (16) der ersten Potentialgruppe (30) bereitzustellen.

12. Steuervorrichtung nach Anspruch 11, wobei das Schutzmodul (100) einen zweiten Versorgungsanschluss aufweist, um mit einem weiteren Potential verbunden zu werden, welches die Ausgabe-Baugruppe (42) speist, und wobei die Ausgabe-Baugruppe (42) galvanisch von dem Schutzmodul (100) getrennt ist.

13. Steuervorrichtung nach einem der Ansprüche 5 bis 12, wobei das Schutzmodul (100) mehrkanalig-redundant ausgebildet ist.

14. Steuervorrichtung nach einem der Ansprüche 5 bis 13, wobei die Steuervorrichtung eine sichere Steuerung ist und zumindest zwei getrennte Signalverarbeitungskanäle, einen diversitären Aufbau und/oder eine Spannungs- oder Zeitüberwachung aufweist, und/oder wobei die Steuervorrichtung dazu eingerichtet ist, das Ein- und/oder Ausgangsmodul kontinuierlich zu testen sowie ein sicheres Abschaltverhalten in einem Fehler- oder Gefahrenfall zu gewährleisten.

15. Verfahren zur Steuerung einer technischen Anlage, umfassend:
- Bereitstellen einer Steuervorrichtung (10) mit modularem Aufbau mit mindestens einem Eingangsmodul (14) und einem Ausgangsmodul (16);
- Empfangen eines Eingangssignals über das Eingangsmodul (14), welches einen Zustand der technischen Anlage beschreibt; und
- Ausgeben eines Ausgangssignals über das Ausgangsmodul (16), welches die technische Anlage steuert, in Abhängigkeit des Eingangssignals; **gekennzeichnet durch**
- Integrieren eines Schutzmoduls (100) gemäß einem der Ansprüche 1 bis 4.

## Claims

1. A guard module (100) for monitoring operability of an input module (14) and an output module (16) of a control device (10) having a modular structure, the guard module comprising:
a bus module part (24) configured to receive state information from the input module (14) and the output module (16);
a logic module part (22) configured to evaluate the state information from the input module (14) and the output module (16);
an output module part (20; 42) configured to confirm an output signal of the output module (16) based on the evaluation,
wherein the input module (14) and the output module (16) form a first potential group (30) within the modular structure, and
wherein at least the logic module part (22) of the guard module (100) forms a second potential group (32) independent of the first potential group within the modular structure.

2. The guard module (100) of claim 1, further comprising:
an isolation (38; 52) configured to electrically isolate a circuit in the logic module part (22) from a circuit in the output module part (42) and/or the bus module part (24).

3. The guard module (100) according to claim 1 or 2, wherein the output module part (42) comprises a terminal (48) for receiving an external peripheral voltage, and wherein the terminal (48) is configured to feed, by means of the external peripheral voltage, the output signal of the output module (16).

4. The guard module (100) according to claim 3, wherein the logic module part (22) is configured to stop feeding of the output signal of the output module (16) from the external peripheral voltage.

5. A control device (10) having a modular structure for controlling a technical installation, the control device comprising:
an input module (14) configured to receive an input signal representing a state of the technical installation;
an output module (16) configured to output an output signal which controls the technical installation based on the input signal;
a guard module (100) according to any one of claims 1 to 4.

6. The control device according to claim 5, wherein the first potential group (30) provides the output signal and the second potential group (32) provides a signal for confirming the output signal.

7. The control device according to claim 5 or 6, wherein the input module (14), the output module (16), and the guard module (100) each comprise a bus module part (24) via which the input module (14), the output module (16), and the guard module (100) are connected to one another, wherein the bus module part of the guard module (100) has an isolation (38) configured to galvanically isolate the bus module part of the guard module (100) from further components of the guard module (100).

8. The control device according to any one of claims 5 to 7, wherein the input module (14) and the output module (16) are configured to send state information to the guard module (100) at defined intervals, and wherein the guard module (100) is configured to confirm the output signal based on the state information.

9. The control device according to any one of claims 5 to 8, wherein the first potential group (30) comprises, in addition to the input module (14) and the output module (16), one or more further modules relevant for providing the output signal, wherein the further modules are each configured to transmit the state information at the defined intervals, and wherein the guard module (100) is configured to confirm the output signal in dependence on the reception of the state information of all relevant modules.

10. The control device according to any one of claims 5 to 9, wherein the guard module (100) comprises a first supply terminal (34) to be connected to a potential forming the second potential group (32).

11. The control device according to any one of claims 5 to 10, wherein the guard module (100) comprises an output module part (42) configured to provide the output signal for the output module (16) of the first potential group (30).

12. The control device according to claim 11, wherein the guard module (100) comprises a second supply terminal to be connected to a further potential feeding the output module part (42), and wherein the output module part (42) is galvanically isolated from the guard module (100).

13. The control device according to any one of claims 5 to 12, wherein the guard module (100) is of multi-channel redundant design.

14. The control device according to any one of claims 5 to 13, wherein the control device is a safety controller comprising at least one of: two separate signal processing channels, a diversitary structure, and a voltage/time monitoring, and/or, wherein the control device is configured to test the input and/or output module continuously as well as to ensure a safe shutdown behavior in case of a fault or danger.

15. A method for controlling a technical installation, the method comprising:
- Providing a control device (10) having a modular structure with at least one input module (14) and one output module (16);
- Receiving an input signal via the input module (14), the input signal representing a state of the technical installation;
- Outputting an output signal via the output module (16), the output signal controlling the technical installation based on the input signal;
- Integrating a guard module (100) according to any one of claims 1 to 4.

## Revendications

1. Module de protection (100) permettant de surveiller une fonctionnalité d'un module d'entrée et d'un module de sortie d'un dispositif de commande (10) de structure modulaire, comprenant :
un sous-ensemble de bus (24) qui est conçu pour recevoir une information d'état du module d'entrée (14) et du module de sortie (16),
un sous-ensemble logique (22) qui est conçu pour évaluer l'information d'état du module d'entrée (14) et du module de sortie (16),
un sous-ensemble de sortie (20 ; 42) qui est conçu pour confirmer sur la base de l'évaluation un signal de sortie du module de sortie (16),
dans lequel le module d'entrée (14) et le module de sortie (16) forment à l'intérieur de la structure modulaire un premier groupe de potentiel (30), et
dans lequel au moins le sous-ensemble logique (22) du module de protection (100) constitue un deuxième groupe de potentiel (32) indépendant du premier groupe de potentiel à l'intérieur de la structure modulaire.

2. Module de protection (100) selon la revendication 1, comprenant en outre :
un dispositif d'isolation (38 ; 52) qui est conçu pour isoler galvaniquement un circuit électrique dans le sous-ensemble logique (22) par rapport à un circuit électrique du sous-ensemble de sortie (42) et/ou du sous-ensemble de bus (24).

3. Module de protection (100) selon la revendication 1 ou 2, dans lequel le sous-ensemble de sortie (42) présente une borne (48) pour recevoir une tension périphérique externe et est conçu pour alimenter le signal de sortie du module de sortie (16) au moyen de la tension périphérique externe.

4. Module de protection (100) selon la revendication 3, dans lequel le sous-ensemble logique (22) est conçu pour inhiber l'alimentation du signal de sortie à partir de la tension périphérique externe.

5. Dispositif de commande (10) de structure modulaire pour commander une installation technique, comprenant :
un module d'entrée (14) qui est conçu pour recevoir un signal d'entrée qui décrit un état de l'installation technique, et
un module de sortie (16) qui est conçu pour sortir en fonction du signal d'entrée un signal de sortie qui commande l'installation technique,
un module de protection (100) selon l'une quelconque des revendications 1 à 4.

6. Dispositif de commande selon la revendication 5, dans lequel le premier groupe de potentiel (30) fournit le signal de sortie, et le deuxième groupe de potentiel (32) fournit un signal pour confirmer le signal de sortie.

7. Dispositif de commande selon l'une quelconque des revendications 5 ou 6, dans lequel le module d'entrée (14), le module de sortie (16) et le module de protection (100) comprennent respectivement une partie de module de bus (24) par laquelle le module d'entrée (14), le module de sortie (16) et le module de protection (100) sont reliés ensemble, dans lequel la partie de module de bus du module de protection (100) présente un dispositif d'isolation galvanique (38) qui est conçu pour isoler galvaniquement la partie de module de bus du module de protection (100) par rapport à d'autres composants du module de protection (100).

8. Dispositif de commande selon l'une quelconque des revendications 5 à 7, dans lequel le module d'entrée (14) et le module de sortie (16) sont conçus pour amener l'information d'état au module de protection (100) à des intervalles définis, le module de protection (100) étant conçu pour confirmer le signal de sortie en fonction de l'information d'état.

9. Dispositif de commande selon l'une quelconque des revendications 5 à 8, dans lequel le premier groupe de potentiel (30) comprend en plus du module d'entrée (14) et du module de sortie (16) un ou plusieurs autres modules qui sont pertinents pour une fourniture du signal de sortie et qui sont respectivement conçus pour envoyer l'information d'état à l'intervalle défini, le module de protection (100) étant conçu pour confirmer le signal de sortie en fonction de la réception des informations d'état de tous les modules pertinents.

10. Dispositif de commande selon l'une quelconque des revendications 5 à 9, dans lequel le module de protection (100) présente une première borne d'alimentation (34) pour être relié à un potentiel qui constitue le deuxième groupe de potentiel (32).

11. Dispositif de commande selon l'une quelconque des revendications 5 à 10, dans lequel le module de protection (100) présente un sous-ensemble de sortie (42) qui est conçu pour fournir le signal de sortie du module de sortie (16) du premier groupe de potentiel (30).

12. Dispositif de commande selon la revendication 11, dans lequel le module de protection (100) présente une deuxième borne d'alimentation pour être relié à un autre potentiel qui alimente le sous-ensemble de sortie (42), et dans lequel le sous-ensemble de sortie (42) est isolé galvaniquement par rapport au module de protection (100).

13. Dispositif de commande selon l'une quelconque des revendications 5 à 12, dans lequel le module de protection (100) est réalisé de manière redondante à plusieurs canaux.

14. Dispositif de commande selon l'une quelconque des revendications 5 à 13, dans lequel le dispositif de commande est une commande sûre et présente au moins deux canaux de traitement de signal séparés, une structure diversifiée et/ou une surveillance de la tension ou du temps, et/ou dans lequel le dispositif de commande est conçu pour tester en continu le module d'entrée et/ou de sortie et pour assurer un comportement de coupure sûr en cas de défaut ou de danger.

15. Procédé permettant de commander une installation technique, comprenant les étapes consistant à :
- fournir un dispositif de commande (10) de structure modulaire, comprenant au moins un module d'entrée (14) et un module de sortie (16) ;
- recevoir un signal d'entrée par l'intermédiaire du module d'entrée (14) qui décrit un état de l'installation technique ; et
- sortir un signal de sortie par l'intermédiaire du module de sortie (16) qui commande l'installation technique, en fonction du signal d'entrée ;
**caractérisé par** l'étape consistant à
- intégrer un module de protection (100) selon l'une quelconque des revendications 1 à 4.
